# DEMANDE DE BREVET EUROPEEN

(11) **EP 1 219 797 A1**
(43) Date de publication de la demande: **03.07.2002**
(21) Numéro de dépôt: 01403249.4
(22) Date de dépôt: 14.12.2001
(51) Int. Cl.: F02B 31/04

(54) **Système d'admission de gaz dans une chambre à combustion comportant des moyens de déflection**

(30) Priorité: 28.12.2000 FR 0017156
(71) Demandeur: Renault, 92100 Boulogne Billancourt (FR)
(72) Inventeur: Pradere, Thierry, 91300 Massy (FR)

(57) **Abrégé**

L'invention propose un système d'admission de gaz dans au moins une chambre de combustion (22) d'un moteur à combustion, qui comporte un conduit d'admission (24) des gaz, qui débouche dans la chambre (22) par un orifice d'entrée (32, 34) obturé par une soupape d'admission qui comporte une queue de commande (37, 39) et qui est excentré par rapport à l'axe (A1) du cylindre (10) et du type dont le conduit (24) comporte des moyens de déflexion aérodynamique (68), caractérisé en ce que les moyens de déflexion aérodynamique (68) comportent au moins une première protubérance (70) de la surface interne (64) de la paroi qui est située dans une première zone de déflexion (72) de la surface interne (64) de la paroi du conduit (24) à proximité de la queue de soupape (37, 39), de façon à favoriser le régime laminaire de l'écoulement des gaz dans l'extrémité libre aval du conduit (24) pour augmenter la perméabilité du système d'admission.

## Description

L'invention concerne un système d'admission de gaz dans au moins une chambre de combustion d'un cylindre d'un moteur à combustion.

Les moteurs à essence, notamment les moteurs à injection directe, permettent d'optimiser le fonctionnement du moteur avec des mélanges dits "pauvres", c'est-à-dire des mélanges carburés dans lesquels il existe un fort excès de gaz comburant, tel que de l'air, par rapport à la quantité de carburant introduite dans le cylindre.

L'utilisation des mélanges pauvres permet notamment de réduire de manière importante la consommation de carburant, mais aussi de réduire la température maximale atteinte au cours de la combustion, ce qui permet aussi de diminuer la production de substances polluantes telles que les oxydes d'azote (NOx).

De même, l'excès de gaz permet d'éviter qu'une partie du carburant reste imbrûlée après la combustion et soit évacuée avec les gaz d'échappement.

Dans les moteurs diesel, l'allumage se fait par auto-inflammation du carburant dans des zones dans lesquelles le mélange gaz/carburant est riche.

L'optimisation de la combustion dans les moteurs diesel implique notamment de favoriser le mélange air/carburant et d'amener ainsi de l'air autour des jets de carburant.

Dans ce but, il est connu de favoriser le mélange air/carburant par la formation dans le cylindre d'un mouvement tourbillonnaire dit de "swirl" dans lequel les gaz contenus dans le cylindre sont animés d'un mouvement global de rotation autour d'un axe sensiblement parallèle à l'axe du cylindre.

Pour aboutir à un fonctionnement optimal du moteur, il est nécessaire de considérer l'ensemble des paramètres qui régissent l'aérodynamique interne du cylindre, c'est-à-dire notamment l'écoulement des différents fluides dans le cylindre au cours d'un cycle moteur, en tenant notamment compte de la forme de la culasse, des ouvertures et fermetures des soupapes d'admission et d'échappement, de la position et de l'orientation de l'injecteur et des mouvements alternatifs du piston.

Le mouvement tourbillonnaire est notamment créé en fin de compression, et particulièrement durant la phase d'injection du carburant, par l'écoulement de l'air dans la chambre de combustion réalisée dans la tête du piston.

Le mouvement de "swirl" créé au cours de la phase d'admission du carburant nécessite aussi un tracé particulier du système d'admission.

Les systèmes d'admission existant permettent l'obtention d'un mouvement de "swirl" à l'aide de conduits du type "hélicoïdal" ou "tangentiel". Des dispositifs agencés dans les conduits permettent aussi d'augmenter les turbulences. Il s'agit notamment d'un boisseau rotatif, d'une guillotine, d'un volet mobile, etc.

Cependant, ces systèmes d'admission ont une perméabilité qui est réduite, la perméabilité étant définie comme étant le débit de passage de l'air dans l'orifice d'entrée d'une soupape lors de son ouverture. Une perméabilité réduite entraîne une dégradation du remplissage en air des chambres de combustion du moteur, notamment aux fortes charges. En effet, dans ce cas, la quantité de l'air admise dans le cylindre est inférieure à la quantité d'air qui est nécessaire à la combustion optimale du mélange air/carburant.

Le mouvement de swirl obtenu par de tels systèmes d'admission n'est pas optimal.

De plus les dispositifs augmentent le nombre de pièces à assembler, la complexité des systèmes d'admission ainsi que leur coût d'assemblage.

Dans le but de fournir une solution à ces problèmes, l'invention propose un système d'admission de l'air dans au moins une chambre de combustion d'un cylindre d'un moteur à combustion, qui comporte au moins un conduit d'admission des gaz, notamment d'air, qui débouche dans la chambre par un orifice d'entrée qui est obturé par une soupape d'admission qui comporte une queue de commande et qui est excentré par rapport à l'axe du cylindre et du type dont au moins un tronçon aval du conduit d'admission comporte des moyens de déflexion aérodynamique,
caractérisé en ce que les moyens de déflexion aérodynamique comportent au moins une première protubérance de la surface interne de la paroi qui est située sur une première zone de déflexion de la surface interne de la paroi du conduit à proximité de la queue de soupape, de façon à favoriser la formation d'un mouvement tourbillonnaire dit de "swirl" dans lequel les gaz contenus dans le cylindre sont animés d'un mouvement de rotation autour d'un axe sensiblement parallèle à l'axe du cylindre.

Selon d'autres caractéristiques de l'invention :
- les moyens de déflexion comportent une seconde protubérance qui est située dans une seconde zone de déflexion agencée sensiblement en vis-à-vis de la première zone de déflexion ;
- l'une au moins des protubérances est réalisée en une seule pièce avec le conduit ;
- l'une au moins des protubérances est réalisée par déformation de la surface interne de la paroi du conduit, de l'extérieur vers l'intérieur ;
- l'une au moins des protubérances est rapportée sur l'une des zones de déflexion du conduit ;
- l'un au moins des conduits est de type tangentiel à la paroi cylindrique de la chambre de combustion ;
- il comporte deux conduits d'admission, et les deux conduits d'admission comportent chacun au moins une protubérance et sont sensiblement symétriques l'un par rapport à l'autre selon un plan de symétrie médian.

D'autres caractéristiques et avantages de l'invention apparaîtront à la lecture de la description détaillée qui suit pour la compréhension de laquelle on se reportera aux dessins annexés dans lesquels :
- la figure 1 représente une vue schématique en coupe axiale illustrant un cylindre d'un moteur équipé d'un système d'admission selon l'état de la technique ;
- la figure 2 est une vue en coupe selon un plan sensiblement horizontal 2-2 de la figure 1 du système d'admission selon l'état de la technique ;
- la figure 3 est une vue en coupe similaire à celle représentée à la figure 2 qui illustre un système d'admission selon l'invention ;
- la figure 4 est une vue similaire à celle représentée à la figure précédente, le système d'admission étant réalisé selon une variante ;
- la figure 5 est une vue en perspective du système d'admission réalisé selon la variante représentée à la figure précédente.

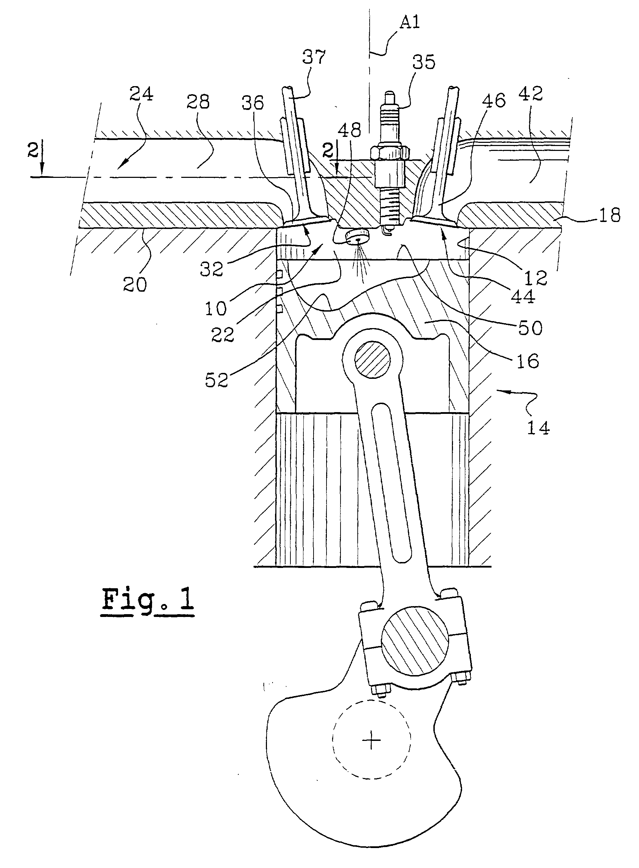

Afin de faciliter la compréhension de la description ainsi que des revendications, on utilisera une orientation amont, aval correspondant à la direction générale de l'écoulement des gaz dans le système d'admission, de la gauche vers la droite conformément à la figure 1.

La description traite d'un moteur à essence à injection directe, cependant elle n'est pas limitative. L'invention peut s'appliquer à différents types de moteurs tels qu'un moteur à essence à injection indirecte ou un moteur diesel.

Le cylindre 10 est réalisé sous la forme d'un alésage 12 cylindrique d'axe vertical A1 aménagé dans un bloc-moteur 14. Un piston 16 est animé d'un mouvement alternatif axial dans l'alésage 12 et il délimite, vers le bas, le volume du cylindre. Le bloc-moteur 14 est recouvert d'une culasse 18 dont une face inférieure 20 délimite vers le haut le cylindre 10.

L'espace situé entre le piston 16, la culasse 18 et le cylindre 10 est appelé chambre de combustion 22.

La culasse du moteur comporte un conduit d'admission 24 des gaz, notamment d'air, dans le cylindre 10.

Le conduit d'admission 24, comporte ici un tronçon amont 26 qui se divise en un premier et un second tronçons aval 28 et 30.

Chaque premier et second tronçons aval 28 et 30 débouche dans la chambre de combustion 22 par un premier et un second orifices d'entrée 32 et 34 obturés par une première et une seconde soupapes d'admission 36 et 38 respectivement.

Chacune des soupapes d'admission 36 et 38 est commandée par une queue 37 et 39 respectivement qui s'étend dans le tronçon aval 28 et 30 et traverse la paroi du conduit 24.

Les premier et second orifices 32, 34 sont excentrés par rapport à l'axe A1 du cylindre 10.

Le cylindre 10 comporte aussi une bougie d'allumage 35 à étincelles, qui peut être agencée sensiblement selon l'axe A1 du cylindre.

Par ailleurs, la culasse 18 comporte aussi un conduit d'échappement 42 des gaz brûlés qui s'ouvre par un orifice de sortie 44 dans la face inférieure 20 de la culasse. Chacun des orifices de sortie 44 du conduit d'échappement 42 est destiné à être obturé par une soupape d'échappement 46 qui présente, par exemple, un diamètre supérieur au diamètre des soupapes d'admission 36 et 38.

S'agissant d'un moteur à injection directe, le cylindre 10 comporte aussi un injecteur de carburant dont le nez 48 débouche directement dans la chambre 22.

Comme on peut le voir sur la figure 1, le piston 16 comporte, dans sa face supérieure 50, un évidement concave 52 (aussi appelé bol) qui, en vue de dessus, présente une forme sensiblement circulaire. L'évidement 52 est excentré par rapport à l'axe A1 du cylindre. En effet, il est intéressant que l'injecteur et l'évidement 52 soient agencés de telle sorte que l'axe d'injection de carburant par l'injecteur arrive de manière à peu près tangentielle à la surface latérale de l'évidement 52, vers l'intérieur de celui-ci.

De façon à favoriser le mouvement tourbillonnaire de swirl dans la chambre de combustion 22, il est connu d'agencer à l'intérieur du conduit d'admission 24 des dispositifs, non représentés, tels que des boisseaux rotatifs, des guillotines ou des volets. Ces dispositifs provoquent des mouvements aérodynamiques de l'air à l'intérieur du conduit d'admission 24 qui favorisent le mouvement tourbillonnaire de swirl dans la chambre de combustion 22.

Cependant, ces dispositifs provoquent notamment une perte de charge qui pénalise fortement la perméabilité du conduit d'admission 24, notamment lorsque le moteur fonctionne à forte charge. En effet, les turbulences formées dans le conduit d'admission 24 diminuent l'écoulement de l'air.

Les turbulences se forment notamment dans les tronçons aval 28 et 30 à proximité des orifices d'entrée 32 et 34.

Les turbulences sont aussi dues au décollement de la couche limite de l'air de la surface interne des parois des tronçons aval 28 et 30.

L'existence de la couche limite est due aux frottements de l'air avec la surface interne des parois. On peut la définir comme étant constituée par l'air qui sont situés à proximité de la surface interne et dont la vitesse d'écoulement est différente de la vitesse globale de l'air dans le tronçon aval 28, 30 correspondant. Son épaisseur correspond à la distance à laquelle la vitesse de l'air atteint 99% de la vitesse du flux non perturbé par les frottements avec la surface interne 64.

Dans la suite, la description sera réalisée de façon non limitative en référence au premier tronçon aval 28.

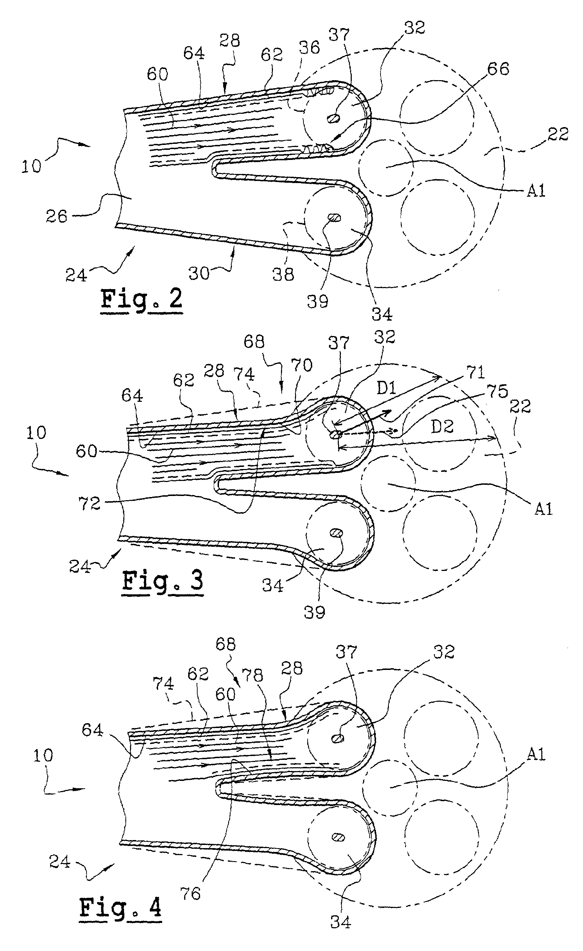

La figure 2 représente notamment l'écoulement d'un flux d'air dans le tronçon aval 28 d'un système d'admission selon l'état de la technique.

Le flux d'air comporte un flux central 60 et une couche limite 62 qui est située entre le flux central 60 et une surface interne 64 du tronçon aval 28.

L'écoulement de la couche limite 62 est laminaire en amont du tronçon aval 28, c'est à dire que la couche limite 62 est collée à la surface interne 64 de la paroi du tronçon aval 28.

L'écoulement de la couche limite 62 devient turbulent dans une zone d'extrémité aval 66, c'est à dire que la couche limite 62 est décollée de la zone d'extrémité aval 66 de la surface interne 64 du tronçon aval 28.

Le décollement ainsi produit est défavorable à l'écoulement de l'air dans le conduit d'admission 24. Il augmente avec le débit de l'air qui circule dans le conduit admission 24. De plus, il ne permet pas d'obtenir un mouvement de swirl optimal.

Pour supprimer ces problèmes l'invention propose, conformément à la figure 3, que des moyens de déflexion aérodynamique 68 comportent au moins une première protubérance 70 de la surface interne 64 de la paroi du premier tronçon aval 28.

La protubérance 70 est située dans une première zone de déflexion 72 de la surface interne 64 de la paroi du tronçon aval 28 du conduit 24, à proximité de la queue de soupape 37.

Une telle protubérance 70 permet de favoriser le régime laminaire de l'écoulement de l'air à l'extrémité libre aval du conduit 24. Elle permet ainsi d'orienter le flux d'air dans une zone de l'orifice 32 qui favorise la formation du mouvement tourbillonnaire de swirl.

L'interaction entre la queue de soupape 37 et la protubérance 70 permet de plaquer la couche limite 62 contre la surface interne 64 de la paroi du premier tronçon aval 28. Le décollement est alors décalé en aval de la protubérance 70.

De plus, le flux d'air est orienté vers une zone de l'orifice 32 située à proximité de la paroi tubulaire de l'alésage 12 du cylindre

Avantageusement, la déflexion aérodynamique est telle que la couche limite 62 est maintenue contre la paroi interne 64. L'écoulement du flux est alors laminaire jusqu'à son entrée dans la chambre de combustion 22.

Ainsi, les turbulences du flux d'air dans le conduit admission 24 sont minimales, ce qui permet d'optimiser le compromis entre la perméabilité du système d'admission et la formation du mouvement tourbillonnaire de swirl dans la chambre de combustion 22.

De plus, la première protubérance 70 permet d'orienter le flux d'air et de modifier son angle incident par rapport à la paroi cylindrique de la chambre de combustion 22.

En effet, les figures 3 et 4 représentent en trait fort le tronçon aval 28 selon l'invention qui comporte la première protubérance 70, ainsi que la direction 71 de l'air lors de leur entrée dans la chambre de combustion 22.

Les traits pointillés 74 représentent la position de la surface interne 64 de la paroi du tronçon aval 28 selon l'état de la technique, Ils représentent aussi la direction 75 de l'air lors de leur entrée dans la chambre de combustion 22.

L'angle qui s'étend entre la paroi cylindrique de la chambre de combustion 22 et la direction 71 de l'air de selon l'invention est plus faible que l'angle séparant ladite paroi cylindrique de la direction 75 de l'air selon l'état de la technique.

De plus, la distance D1 entre l'orifice d'entrée 32 et la zone d'impact de i'air avec la paroi tubulaire de la chambre de combustion 22 selon l'invention, est plus faible que la distance D2 correspondante selon l'état de la technique.

Cela permet d'augmenter le mouvement tourbillonnaire de swirl de l'air à l'intérieur de la chambre de combustion 22.

La forme, les dimensions et la position de la protubérance 70 sont déterminées pour que la perméabilité de l'orifice d'entrée 32 correspondant, ainsi que le mouvement tourbillonnaire de swirl soient optimaux.

Le conduit d'admission 24 peut être du type tangentiel, c'est-à-dire que la direction du flux d'air qui traverse les orifices d'entrée 32 et 34 est d'orientation sensiblement tangentielle à la paroi cylindrique de la chambre de combustion 22.

Selon l'invention, la première protubérance 70 peut être réalisée en une seule pièce avec le conduit d'admission 24.

Ainsi, la première protubérance 70 peut être réalisée lors du moulage du conduit d'admission 24.

La protubérance 70 peut aussi être obtenue par déformation de la surface interne 64 de la paroi du conduit 24 de l'extérieur vers l'intérieur.

La déformation peut par exemple être réalisée par un poinçon dont une tête de pression applique un effort sur la surface extérieure de la paroi du conduit 24 en vis-à-vis de la zone de déflexion 72 de façon à provoquer la déformation du conduit 24.

Selon une variante, la première protubérance 70 peut être rapportée, par exemple par soudage ou par collage, sur la première zone de déflexion 72 du conduit 24.

Conformément à la figure 4, les moyens de déflexion aérodynamique 68 comportent une seconde protubérance 76 de la surface interne 64 de la paroi du tronçon aval 28 du conduit 24. Elle est située sur une seconde zone de déflexion 78, à proximité de la queue de soupape 37.

La seconde zone de déflexion 78 est située sensiblement à l'opposé de la première zone de déflexion 72 par rapport à la queue 37 de la soupape 36, conformément à la figure 7. L'interaction entre la queue de soupape 37 et la seconde protubérance 76 permet aussi de plaquer la couche limite 62 contre la surface interne 64 de la paroi du premier tronçon aval 28 de façon à favoriser le régime laminaire de l'écoulement de l'air dans l'extrémité libre aval du conduit 24 et permet aussi d'orienter le flux dans une zone de l'orifice 32 qui favorise la formation du mouvement tourbillonnaire de swirl.

En effet, le flux est orienté de préférence dans la zone avant de l'orifice 32, c'est-à-dire la zone située en aval du conduit 24 par rapport à la direction générale de l'écoulement du flux d'air dans le conduit d'admission 24.

Lors d'un fonctionnement du moteur à faible ou moyenne charge, la section de l'orifice d'entrée 32 de la soupape 36 est suffisante pour permettre le passage de la quantité d'air nécessaire à la combustion de la chargé carburée. La seconde soupape 38 obture alors le second orifice d'entrée 34 et le système d'admission selon l'invention permet l'introduction, dans la chambre de combustion 22, de la quantité d'air nécessaire animée d'un mouvement de swirl élevé.

Lors d'un fonctionnement du moteur à forte charge, la présence des première 70 et seconde 76 protubérances défavorisent le décollement de la couche limite et oriente le flux d'air, ce qui augmente la formation du mouvement de swirl par le système d'admission.

Le mouvement tourbillonnaire de swirl important permet de favoriser le mélange de l'air et du carburant dans la chambre de combustion 22 et d'améliorer les performances du moteur.

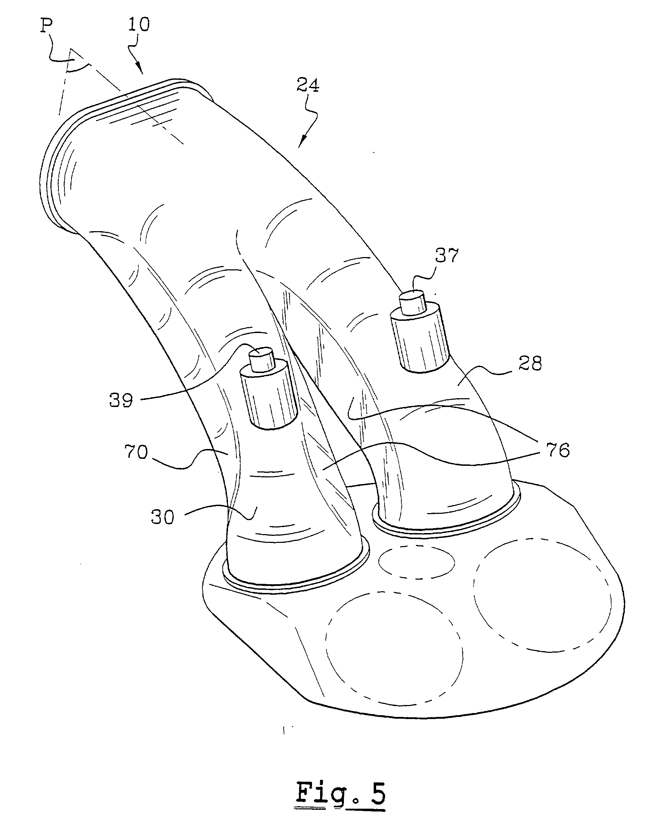

La figure 5 illustre en perspective un système d'admission qui comporte notamment un premier 28 et un second 30 tronçons aval qui comportent chacun une première 70 et une seconde 76 protubérances.

Ils peuvent être symétriques par rapport à un plan P médian. Cette symétrie permet par exemple, lors de certaines conditions de fonctionnement du moteur qui ne nécessitent pas de mouvement tourbillonnaire de swirl, d'ouvrir de façon identique la première et la seconde soupapes 36 et 38. Ainsi les mouvements tourbillonnaires de swirl provoqués par chacun des flux issus du premier 32 et du second 34 orifices d'entrée s'annulent mutuellement.

Le conduit d'admission 24 décrit précédemment comporte deux tronçons aval 28 et 30 qui débouchent chacun dans la chambre de combustion par un orifice d'entrée 32 et 34 respectivement. Cependant, une telle réalisation n'est pas limitative, le système d'admission d'air pouvant comporter un conduit d'admission débouchant dans la chambre de combustion par un orifice d'entrée unique obturé par une soupape.

## Revendications

1. Système d'admission de gaz dans au moins une chambre de combustion (22) d'un cylindre (10) d'un moteur à combustion, qui comporte au moins un conduit d'admission (24) des gaz, notamment d'air, qui débouche dans la chambre (22) par un orifice d'entrée (32, 34) qui est obturé par une soupape d'admission (36, 38) qui comporte une queue de commande (37, 39) et qui est excentré par rapport à l'axe (A1) du cylindre (10) et du type dont au moins un tronçon aval (28, 30) du conduit d'admission (24) comporte des moyens de déflexion aérodynamique (68),
**caractérisé en ce que** les moyens de déflexion aérodynamique (68) comportent au moins une première protubérance (70) de la surface interne (64) de la paroi qui est située dans une première zone de déflexion (72) de la surface interne (64) de la paroi du conduit (24) à proximité de la queue de soupape (37, 39), de façon à favoriser la formation d'un mouvement tourbillonnaire dit de "swirl" dans lequel les gaz contenus dans le cylindre (10) sont animés d'un mouvement de rotation autour d'un axe sensiblement parallèle à l'axe du cylindre (10).

2. Système d'admission selon la revendication précédente, **caractérisé en ce que** les moyens de déflexion (68) comportent une seconde protubérance (76) qui est située dans une seconde zone de déflexion (78) agencée sensiblement en vis-à-vis de la première zone de déflexion (72).

3. Système d'admission selon l'une des revendications précédentes, **caractérisé en ce que** l'une au moins des protubérances (70, 76) est réaiisée en une seule pièce avec le conduit (24).

4. Système d'admission selon la revendication précédente, **caractérisé en ce que** l'une au moins des protubérances (70, 76) est réalisée par déformation de la surface interne (64) de la paroi du conduit (24), de l'extérieur vers l'intérieur.

5. Système d'admission selon l'une quelconque des revendications précédentes, **caractérisé en ce que** l'une au moins des protubérances (70,76) est rapportée dans l'une des zones de déflexion (72, 78) du conduit (24).

6. Système d'admission selon l'une quelconque des revendications précédentes, **caractérisé en ce que** l'un au moins des conduits (24) est de type tangentiel à la paroi cylindrique de la chambre de combustion (22).

7. Système d'admission selon l'une quelconque des revendications précédentes, **caractérisé en ce qu'**il comporte deux tronçons aval (28, 30), et **en ce que** les deux tronçons aval (28, 30) comportent chacun au moins une protubérance (70, 76) et sont sensiblement symétriques l'un par rapport à l'autre selon un plan (P) de symétrie médian.
